# EUROPEAN PATENT SPECIFICATION

(11) **EP 2 452 556 B1**
(45) Date of publication and mention of the grant of the patent: **09.07.2014**
(21) Application number: 11188867.3
(22) Date of filing: 11.11.2011
(51) Int. Cl.: A01K 89/027

(54) **Reel**
Angelspule
Moulinet

(30) Priority: 12.11.2010 GB 201019170
(43) Date of publication of application: 16.05.2012
(73) Proprietor: Frenzee Limited, Newtown, Powys SY16 4LE (GB)
(72) Inventor: Bancroft, Brian R, Newtown, Powys SY16 1NP (GB); Pryce, John M, Newtown, Powys SY16 4NU (GB)
(74) Representative: Makovski, Priscilla Mary

(56) References cited:
- EP-A1- 1 629 714
- FR-A5- 2 083 715
- GB-A- 922 739
- JP-A- H 119 155
- US-A- 4 416 427

## Description

This invention relates to a reel for angling. In particular, it relates to a reel having a braking mechanism that acts on a winding mechanism, and more specifically, a handle of the reel.

An open face reel or spinning reel is commonly used for course fishing. An open face reel comprises fixed spool (i.e. does not rotate), mounted to the reel body, which receives the fishing line. A rotor extends around the spool and is able to rotate relative to the spool. The rotor thereby acts to wind the line onto the spool. The rotor is operated via a winding mechanism which is connected to a handle. The rotor typically includes a movable bail arm or pickup, which works in conjunction with the rotor to guide the line. In a first, open position, the bail arm allows the line to unfurl from the spool when casting, for example. In a second, closed position, the bail arm guides the cast line to the rotor so that it can be wound back onto the spool.

In certain open face reels, the spool is provided with a drag mechanism. The drag mechanism is substantially separate from the winding mechanism and allows the spool to rotate. The drag mechanism is used by fishermen to prevent the line breaking when a fish takes the line as it tries to escape. The drag mechanism allows the spool to pay out line at a rate set by the drag mechanism, without the need for the rotor to rotate.

A further function of known open face reels is an anti-reverse mechanism. The anti-reverse mechanism engages the rotor and locks it from rotating in the unwinding direction in which line is wound off the spool. The anti-reverse mechanism typically comprises a simple ratchet mechanism that locks the rotor in one direction of rotation. The anti-reverse mechanism can be used in combination with the drag mechanism such that with the anti-reverse mechanism activated, unwinding of the line is controlled solely by adjustment of the drag mechanism.

JPH119155 shows a fishing reel in which reverse rotation can be prevented or allowed by a reverse rotation prevention roller engaging or disengaging with a shaft. US 4 416 427 shows a spinning reel comprising the features of the preamble of claim 1 with an adjustable drag mechanism and an anti-reverse mechanism, which has a braking element operating on the rotor and the handle during unwinding. GB 922 739 and FR 2 083 715 show spinning reels where a variable degree of damping resistance in the unwinding direction is provided.

The various functionality provided by present open face reels leads to a difficult to use and unwieldy reel. Often, several mechanisms need to be activated or adjusted when casting, catching and reeling in a fish, which takes time and is awkward.

According to the invention we provide a reel for angling comprising means for receiving a spool adapted to receive a quantity of line, a winding mechanism connecting a handle and a rotor, the handle being arranged to rotate a handle shaft, the rotor adapted to transfer fishing line onto the spool when the winding mechanism is rotated in a winding direction and guide line drawn from the spool when the winding mechanism is rotated in an unwinding direction, the winding mechanism being adapted and arranged such that rotation of the rotor in the unwinding direction is transferred to the handle, and including a unidirectional braking element adapted and arranged to provide damping of rotation of the winding mechanism in the unwinding direction, the braking element including an adjustment element to provide a plurality of levels of damping in the unwinding direction, characterised in that the braking element is arranged to engage the handle shaft of the handle.

This is advantageous as the user can wind or reel in a fish without feeling any resistance from the braking element, however, should a fish take the line, the unwinding of the winding mechanism is damped or resisted. In particular, drawing the line will cause the winding mechanism (including the rotor and the handle) to rotate. The braking element prevents the momentum of the winding mechanism letting out line when the draw on the line reduces or stops. Thus, it prevents "over run" where a quantity of slack line could become tangled in front of the spool. Further, as the braking element forms part of the winding mechanism, and does not act on the spool as in the prior art, the fisherman has more control because they simply have to control the handle, rather than a plurality of other mechanisms. As the braking element is unidirectional it only acts in the unwinding direction. Thus, it provides substantially no resistance to rotation of the winding mechanism in the winding direction. This is advantageous as the user cannot detect any resistance when using the winding mechanism to reel in a fish. Further, as the braking element provides a damping force in the unwinding direction and not an abrupt stop, like an anti-reverse mechanism, the fisherman has more control when reeling his catch in. Lastly, locating the adjustable braking element to engage the handle shaft is advantageous as it is easy to operate while holding the handle. Also, the mounting of the braking element to the handle shaft is advantageous as the shaft may extend through the body of the reel and therefore the braking element could be located on the left or right hand side of the body.

Preferably the adjustment element is arranged to adjust the level of engagement between the braking element and the winding mechanism to provide the levels of damping. Thus, the adjustment element can provide a variable level of damping in the unwinding direction by adjusting the frictional engagement between the braking element and the winding mechanism. Thus, the unidirectional braking element can provide a fine degree of control that was previously only available by the simultaneous use of an anti-reverse mechanism and a drag mechanism.

The adjustment element may be adapted to provide levels of damping resistance between substantially no braking resistance and effectively locking the winding mechanism in the unwinding direction. The term effectively locking is used to define a setting of the adjustment element to provide a high resisting force to motion in the unwinding direction where the force required to rotate the winding mechanism would be unlikely in normal operation, rather than the application of a stop to physically prevent rotation. The adjustment element may be adjustable such that the plurality of levels comprise a continuous range of braking resistances. Alternatively the plurality of levels may comprise a discontinuous or stepped range of braking resistances.

Preferably, the braking element comprises a one-way bearing. This is advantageous because the bearing is simple to arrange such that it is free running in the winding direction and can provide a variable degree of braking in the unwinding direction.

Preferably the adjustment element comprises a clamping structure to provide an adjustable clamping force on the one-way bearing. Thus, the clamping structure can be tightened to increase the friction with the bearing and thereby increase the damping force or loosened to decrease the damping force.

Alternatively, the braking element may comprise a friction element that is actuated by a helical gear arranged to screw into and engage the friction element in the unwinding direction and unscrew from and disengage the friction element in the winding direction.

According to claim 9, we provide a braking element for retrofitting to a reel to form the reel defined in any of claims 1 to 8. There now follows by way of example only a detailed description of the present invention with reference to the accompanying drawings, in which;
**Figure 1** shows a perspective view of an embodiment of the reel;
**Figure 2** shows a side view of the reel with part of the body of the reel removed to reveal part of the winding mechanism;
**Figure 3** shows an exploded view of the braking element;
**Figure 4** shows a cross-sectional view along line A-A of Figure 2;
**Figure 5a** shows a second embodiment of the braking element; and
**Figure 5b** shows a close up view of a part of Figure 5a.

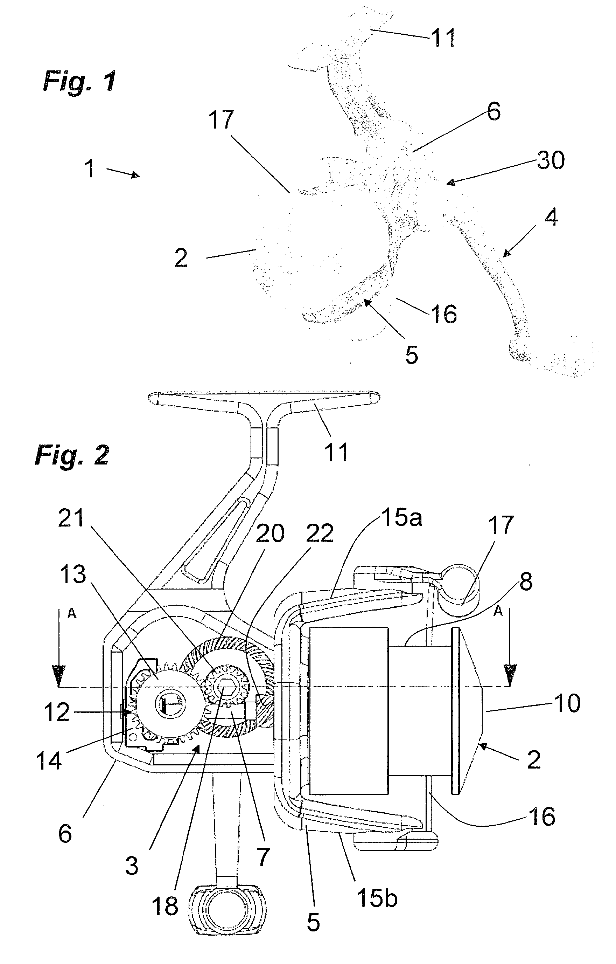

Figures 1 and 2 shows an embodiment of a reel 1, which includes means to receive a spool 2. The spool 2 is adapted to receive a quantity of fishing line there around. The reel 1 further includes a winding mechanism 3 connecting a handle 4 and a rotor 5. The rotor 5 is adapted to transfer fishing line onto the spool 2 when the winding mechanism is rotated in a winding direction. The rotor 5 is further arranged to guide line drawn from the spool 2 when the winding mechanism is rotated in an unwinding direction.

The reel is of open-face or spinning reel design, in which the spool 2 is mounted such that its axis is substantially perpendicular to the axis of rotation of the handle 4.

The reel 1 comprises a body 6 that includes part of the winding mechanism 3. The spool 2 is mounted to a spool shaft 7, which is received within the body 6. Rotational motion of the handle 4 is transferred through the winding mechanism 3 to the rotor 5, which can rotate relative to the body 6 and the spool 2. Thus, the spool 2 and the body 6 are rotationally fixed relative to one another in this embodiment.

The spool 2 includes a recessed portion 8 to receive the line and a fastening means (not visible) to secure it to an annular recess and bar on the spool shaft 7. The fastening means is released by actuation of a release button 10. This enables the spool 2 to be changed or replaced as necessary.

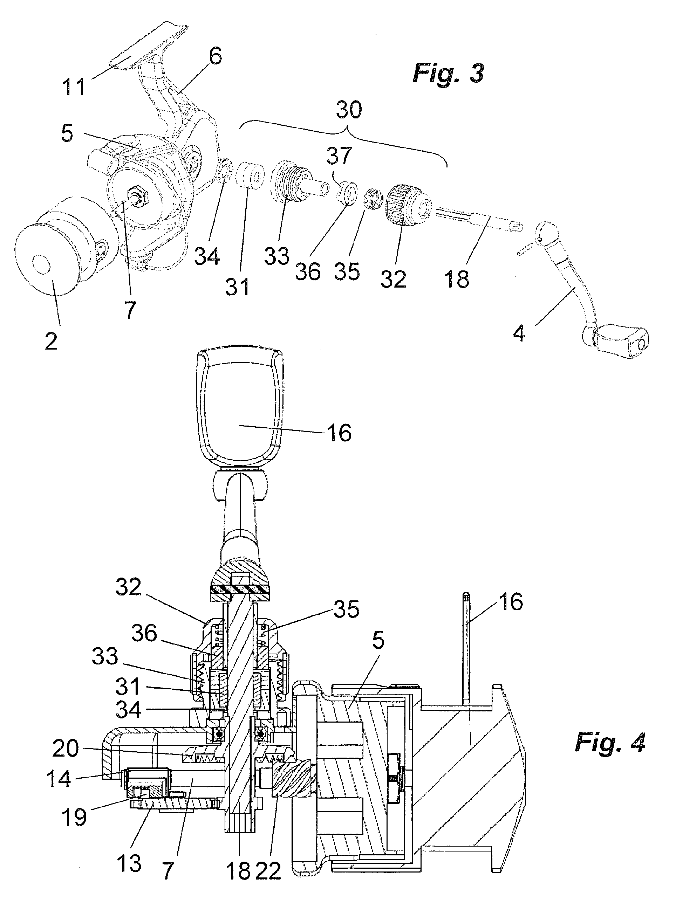

The body 6 includes mounting means 11 to enable the reel to be connected to a fishing rod (not shown). The body 6 also houses an oscillation mechanism 12 connected to the spool shaft 7. The oscillation mechanism 12 is adapted to move the spool shaft 7 back and forth in an axial direction. The oscillation mechanism 12 is connected to the winding mechanism 3 by an oscillation gear 13. The oscillation gear 13 includes a peg 19 (visible in Figure 4) that moves within a groove in an oscillation slider 14. The oscillation slider 14 is secured to the spool shaft 7. Accordingly, on rotation of the winding mechanism 3, the peg of the oscillation gear 13 draws the slider 14 back and forth as it rotates such that the spool 2 reciprocates relative to the rotor 5. The width of the recessed portion 8 corresponds to the amount of reciprocation. Thus, the rotor 5 winds line onto the spool 2 over the width of the recessed portion 8.

The rotor 5 includes two axially extending arms 15a and 15b that extend on opposed sides of the spool 2. A bail arm 16 extends between the free ends of the arms 15a and 15b. The bail arm 16 is hinged to the rotor 5 and can be in an open position in which line can leave the spool without interacting with the rotor 5 and a closed position in which the line is guided by bail arm 16 and rotor 5 to and from the spool 2. The bail arm 16 includes a guide portion 17 adjacent the arm 15a, which guides the line to and from the spool 2.

The handle 4 is secured to and arranged to rotate a handle shaft 18 that extends into the body 6. The handle 4 is secured to a first end of the shaft 18. The other end of the handle shaft 18 includes a drive gear 20 and a transfer gear 21. The drive gear 20 comprises a crown gear to transmit drive to the rotor 5. The transfer gear 21 engages with the oscillation gear 13. The drive gear 20 engages with a pinion gear 22, which is connected to the rotor 5. The pinion gear 22 comprises a tubular body mounted to the rotor 5. The spool shaft 7 extends through the pinion gear 22 and rotor 5 such that the rotor 5 can rotate there around. Thus, the winding mechanism 3 is the structure that transfers motion between the rotor and the handle and vice versa.

Figure 3 shows an exploded view of a braking element 30 that forms part of the winding mechanism 3. Figure 4 comprises a sectional view through the reel, which shows the braking element 30 assembled. The braking element 30 provides a damping force to rotation of the winding mechanism 3 in the unwinding direction. The element 30 comprises a one-way bearing 31 secured to the handle shaft 18 and also held against the body 6 by a cap 32. The bearing 31 comprises an inner surface that is able to rotate relative to an outer surface in only one "free" direction. The inner surface is secured to the handle shaft 18. The outer surface is gripped between the cap 32 and the body 6. The one-way bearing 31 is arranged such that its "free" direction is aligned with the winding direction of the winding mechanism 3.

The cap 32 forms part of an adjustment element for adjusting the damping force applied to the winding mechanism 3. The adjustment element also includes a boss 33 that is fixedly secured to the body 6. The boss 33 includes a screw thread that is complimentary to a screw thread on the inside surface of the cap 32. The boss 33 receives a castellated washer 34 and the bearing 31. The castellations of the washer 34 engage an edge of the outer surface of the bearing 31. Further, the adjustment element includes a castellated interface ring 36. The castellations on the interface ring 36 are complimentary to apertures in the boss 33. The raised portions 37 of the castellations engage with the other edge of the outer surface of the bearing 31 through the apertures in the boss 33. The interface ring 36 is urged against the bearing 31 by the cap 32 via a coil spring 35. Thus, the cap 32 provides a variable clamping force dependent on how tightly the cap 32 is screwed onto the boss 33. Adjustment of the screw threaded connection between the cap 32 and the boss 33 provides a variable level of damping in the unwinding direction as the bearing is gripped. As the raised portions 37 extend through the boss 33, the force that can be applied by the interface ring 36 to the bearing 31 is limited at the point at which the troughs between the castellations contact the boss 33. At this point, the clamping force on the bearing cannot be increased further. It will be appreciated that other means could be provided to limit the maximum clamping force that can be exerted on the bearing 31.

In use, the user can rotate the handle in a winding direction and the bearing will run freely, irrespective of the position of the cap 32 and the clamping force. However, if fishing line is drawn from the spool 2, the line will turn the rotor 5 in the unwinding direction as it slides over the guide portion 17. Rotation of the rotor 5 will be transferred to the winding mechanism 3 and therefore to the handle 4. Rotation of the winding mechanism 3 in the unwinding direction will be damped or resisted by the braking element 30. The braking element 30 therefore provides a resistance in the unwinding direction. Screwing the cap 32 on to the boss 33 increases the clamping force on the bearing 31 and therefore increase the braking force applied by the braking element 30. If less resistance is required, the cap 32 can be unscrewed from the boss to reduce the clamping force on the bearing 31. Further, when the draw on the fishing line reduces or stops, the braking element 30 damps the rotation of the winding mechanism 3 reducing the amount that the rotor 5 turns under its own momentum and the momentum of the winding mechanism. This reduces "over-run" and thereby prevents a build up of loose line in front of the spool.

As the braking and damping of rotation in the unwinding direction is provided through the winding mechanism and not by a drag mechanism acting on the spool shaft 7, the user has more control. If more or less resistance is required, they can easily adjust the adjustment element cap 32. Further, as the braking element 30 acts on the winding mechanism, the user can use the handle 4 to make any adjustments to how the line is wound in or played out, rather than adjusting a drag mechanism.

In a modification, the reel 1 may include a drag mechanism in addition to the braking element 30. The drag mechanism allows controlled rotation of the spool shaft 7 in a direction that allows line to be released from the spool 2. It will be appreciated that the drag mechanism and braking element 30 can be used independently of one another or in combination depending on what the fisherman wants. As the two functions act on different parts of the reel, they can be used separately.

In a further modification, the reel may include an anti-reverse mechanism in addition to the braking element 30. Thus, while it may be possible to tighten the cap 32 sufficiently to prevent unwinding motion (i.e. reverse motion) the reel may include an anti-reverse mechanism that locks the rotor 5. Therefore, if the angler requires the rotor 5 to be locked rather than damped or resisted, then they have the option of activating the anti-reverse mechanism, which moves a pawl into a catch in the rotor 5. This locks the rotor 5 against any reverse motion.

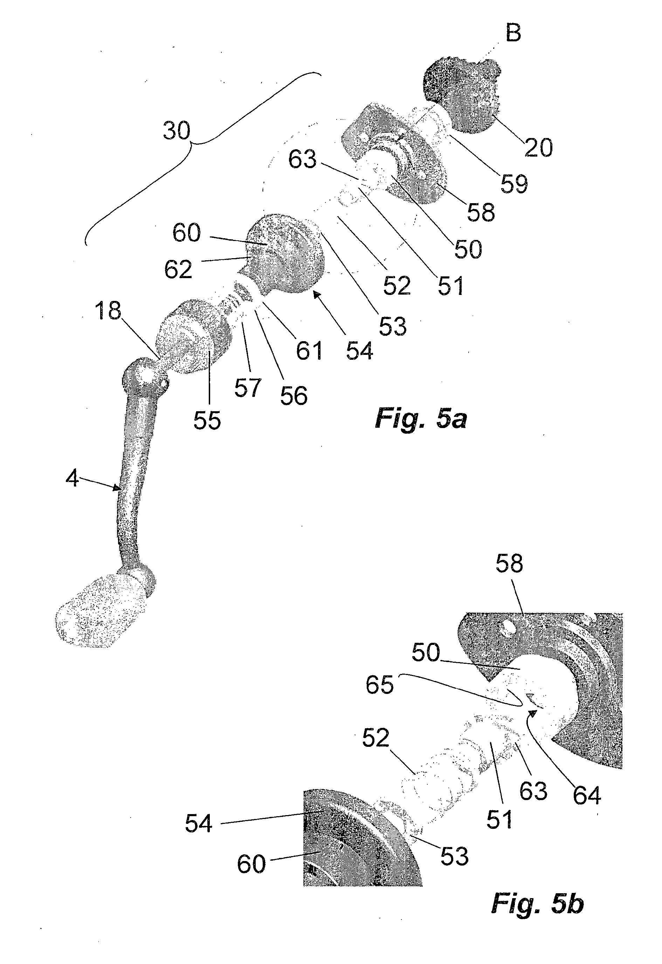

Figures 5a and 5b show a second embodiment of the braking element 30. Figure 5b shows a magnified view of the area marked B in Figure 5a. The braking element 30 comprises a friction element 50, a helical gear 51, a biasing element 52 and a washer 53 that are arranged to be received within a boss 54. The braking element 30 further includes an adjustment element comprising a cap 55, a control ring 56 and a control ring spring 57. The braking element 30 is secured to the body 6 of the reel 1 by a securing plate 58. Figure 5a also shows the handle 4, the handle shaft 18, a roller bearing 59 and the drive gear 20.

The handle shaft 18 has a hexagonal profile so that it can rotationally engage with the washer 53, the helical gear 51 and the drive gear 20. It will be appreciated that other profiles could be used to rotationally couple the above components. The cap 55 includes an internal screw thread and is arranged to screw onto the boss 54, which has a complimentary threaded portion 60. The control ring 56 and control ring spring 57 are contained by the cap and the boss. The control ring 56 includes two diametrically opposed pegs 61 that are arranged to engage with two diametrically opposed projections 62 on the boss 54.

With reference to Figure 5b, the helical gear 51 comprises a tubular body that is rotationally coupled to the handle shaft 18 but can slide there along. The helical gear 51 includes a plurality of helical threads 63 extending around its outwardly facing surface. The friction element 50 comprises a ring shaped element that defines an aperture 64 and includes a multi-start thread 65 that extends part way along its inwardly facing surface. The thread 65 extends from an edge adjacent the helical gear 51 to a mid-point axially along the internal surface. The thread 65 is complimentary to the helical threads 63 of the helical gear 51. The helical gear 51 is biased towards the friction element 50 and into the aperture 64 by the spring 52.

In the winding direction the handle shaft 18 turns in an anti-clockwise direction, as shown the drawing. Thus, the helical gear 51 is urged out of the aperture 64 as the threads 63 and 65 are rotated in an "unscrewing" direction relative to one another. If the handle shaft 18 is rotated in an unwinding direction (clockwise in this example), the helical gear 51 is screwed into the friction element 50 until the threads 63 and 65 are fully engaged. At this point, continued rotation of the helical gear 51 causes rotation of the friction element 50, which bears against the securing plate 58. The friction element 50 resists the rotation. When the handle 4 is rotated in the winding direction, the helical gear 51 unscrews from the friction element 50 and the handle shaft 18 can rotate without resistance from the friction element 50. Rotation of the cap 55 alters the force on the friction element 50 and therefore the degree of rotational resistance.

To retrofit a braking element to an existing reel, a kit may be provided with the parts necessary to engage the handle shaft 18 and secure the braking element to the body 6. Thus, either of the above embodiments of the braking element could be slotted onto the handle shaft 18 to provide the advantages of unidirectional damping applied through the winding mechanism rather than relying on a clutch mechanism on the spool.

## Claims

1. A reel for angling comprising means for receiving a spool (2) adapted to receive a quantity of line, a winding mechanism (3) connecting a handle (4) and a rotor (5), the handle (4) being arranged to rotate a handle shaft (18), the rotor (5) adapted to transfer fishing line onto the spool (2) when the winding mechanism (3) is rotated in a winding direction and guide line drawn from the spool (2) when the winding mechanism (3) is rotated in an unwinding direction, the winding mechanism (3) being adapted and arranged such that rotation of the rotor (5) in the unwinding direction is transferred to the handle (4), and including a unidirectional braking element (30) adapted and arranged to provide damping of rotation of the winding mechanism (3) in the unwinding direction, the braking element (30) including an adjustment element (32, 33) to provide a plurality of levels of damping in the unwinding direction, **characterised in that** the braking element (30) is arranged to engage the handle shaft (18) of the handle (4).

2. A reel according to claim 1, in which the adjustment element (32, 33; 55, 56, 57) is adapted to provide levels of damping resistance between substantially no braking resistance and locking the winding mechanism (3) in the unwinding direction.

3. A reel according to claim 1 or 2, in which the plurality of levels of damping comprise a continuous range of braking resistances.

4. A reel according to claim 1 or 2, in which the plurality of levels comprise a discontinuous or stepped range of braking resistances.

5. A reel according to any preceding claim, in which the adjustment element (32, 33; 55, 56, 57) is arranged to adjust the level of engagement between the braking element (30) and the winding mechanism (3) to provide the levels of damping.

6. A reel according to any preceding claim, in which the braking element (30) comprises a one-way bearing (31).

7. A reel according to claim 6, in which the adjustment element comprises a clamping structure (32, 33) to provide an adjustable clamping force on the one-way bearing (31).

8. A reel according to any of claims 1 to 5, in which the braking element (30) comprises a friction element (50) actuated by a helical gear (51) arranged to screw into and engage the friction element in the unwinding direction and unscrew from and disengage the friction element in the winding direction.

9. A braking element for retrofitting to a reel to form the reel defined in any of claims 1 to 8.

## Patentansprüche

1. Angelspule, aufweisend: eine Einrichtung zur Aufnahme einer Rolle (2), die dafür ausgelegt ist, ein Stück Leine aufzunehmen, einen Wickelmechanismus (3), der einen Griff (4) und einen Rotor (5) verbindet, wobei der Griff (4) so angeordnet ist, dass er eine Griffwelle (18) dreht, der Rotor (5) so ausgelegt ist, dass er eine Angelleine auf die Rolle (2) überträgt, wenn der Wickelmechanismus (3) in einer Aufwickelrichtung gedreht wird, und Leine, die von der Spule (2) abgezogen wird, lenkt, wenn der Wickelmechanismus (3) in einer Abwickelrichtung gedreht wird, wobei der Wickelmechanismus so ausgelegt und angeordnet ist, dass eine Drehung des Rotors (5) in der Abwickelrichtung auf den Griff (4) übertragen wird, und ein unidirektionales Bremselement (30) aufweist, das so ausgelegt und angeordnet ist, dass es für eine Dämpfung der Drehung des Wickelmechanismus (3) in der Abwickelrichtung sorgt, wobei das Bremselement (30) ein Regulierungselement (32, 33) aufweist, um eine Mehrzahl von Dämpfungsgraden in der Abwickelrichtung bereitzustellen, **dadurch gekennzeichnet, dass** das Bremselement (30) so angeordnet ist, dass es mit der Griffwelle (18) des Griffs (4) in Eingriff kommt.

2. Spule nach Anspruch 1, wobei das Regulierungselement (32, 33; 55, 56, 57) dafür ausgelegt ist, Grade eines Dämpfungswiderstands zwischen im Wesentlichen keinem Dämpfungswiderstand und einer Blockierung des Wickelmechanismus (3) in der Abwickelrichtung bereitzustellen.

3. Spule nach Anspruch 1 oder 2, wobei die Mehrzahl von Dämpfungsgraden einen kontinuierlichen Bereich von Bremswiderständen umfasst.

4. Spule nach Anspruch 1 oder 2, wobei die Mehrzahl von Graden einen kontinuierlichen Bereich oder einen gestuften Bereich von Bremswiderständen umfasst.

5. Spule nach einem der vorstehenden Ansprüche, wobei das Regulierungselement (32, 33; 55, 56, 57) so angeordnet ist, dass es den Grad des Eingriffs zwischen dem Bremselement (30) und dem Wickelmechanismus (3) reguliert, um die Grade der Dämpfung bereitzustellen.

6. Spule nach einem der vorangehenden Ansprüche, wobei das Bremselement (30) ein Einweglager (31) aufweist.

7. Spule nach Anspruch 6, wobei das Regulierungselement eine Klemmstruktur (32, 33) aufweist, um eine regulierbare Klemmkraft an das Einweglager (31) anzulegen.

8. Spule nach einem der Ansprüche 1 bis 5, wobei das Bremselement (30) ein Reibelement (50) aufweist, das von einem Schraubenrad (51) betätigt wird, das so angeordnet ist, dass es sich in der Abwickelrichtung in das Reibelement einschraubt und in dieses eingreift und sich in der Aufwickelrichtung aus dem Reibelement ausschraubt und von diesem löst.

9. Bremselement zum nachträglichen Anbau an eine Spule, um die Spule nach einem der Ansprüche 1 bis 8 zu bilden.

## Revendications

1. Un moulinet destiné à la pêche à la ligne comprenant un moyen de réception d'une bobine (2) adapté de façon à recevoir une quantité de ligne, un mécanisme d'enroulement (3) raccordant une poignée (4) et un rotor (5), la poignée (4) étant agencée de façon à faire pivoter un arbre de poignée (18), le rotor (5) étant adapté de façon à transférer la ligne de pêche vers la bobine (2) lorsque le mécanisme d'enroulement (3) est pivoté dans une direction d'enroulement et à guider la ligne tirée à partir de la bobine (2) lorsque le mécanisme d'enroulement (3) est pivoté dans une direction de déroulement, le mécanisme d'enroulement (3) étant adapté et agencé de sorte qu'une rotation du rotor (5) dans la direction de déroulement soit transférée vers la poignée (4), et comprenant un élément de freinage unidirectionnel (30) adapté et agencé de façon à fournir un amortissement de la rotation du mécanisme d'enroulement (3) dans la direction de déroulement, l'élément de freinage (30) comprenant un élément d'ajustement (32, 33) destiné à fournir une pluralité de niveaux d'amortissement dans la direction de déroulement, **caractérisé en ce que** l'élément de freinage (30) est agencé de façon à entrer en prise avec l'arbre de poignée (18) de la poignée (4).

2. Un moulinet selon la Revendication 1, dans lequel l'élément d'ajustement (32, 33 ; 55, 56, 57) est adapté de façon à fournir des niveaux de résistance d'amortissement entre sensiblement aucune résistance de freinage et le verrouillage du mécanisme d'enroulement (3) dans la direction de déroulement.

3. Un moulinet selon la Revendication 1 ou 2, dans lequel la pluralité de niveaux d'amortissement comprend une plage continue de résistances de freinage.

4. Un moulinet selon la Revendication 1 ou 2, dans lequel la pluralité de niveaux comprend une plage discontinue ou graduée de résistances de freinage.

5. Un moulinet selon l'une quelconque des Revendications précédentes, dans lequel l'élément d'ajustement (32, 33 ; 55, 56, 57) est agencé de façon à ajuster le niveau de mise en prise entre l'élément de freinage (30) et le mécanisme d'enroulement (3) de façon à fournir les niveaux d'amortissement.

6. Un moulinet selon l'une quelconque des Revendications précédentes, dans lequel l'élément de freinage (30) comprend un roulement unidirectionnel (31).

7. Un moulinet selon la Revendication 6, dans lequel l'élément d'ajustement comprend une structure de serrage (32, 33) destinée à fournir une force de serrage ajustable sur le roulement unidirectionnel (31).

8. Un moulinet selon l'une quelconque des Revendications 1 à 5, dans lequel l'élément de freinage (30) comprend un élément de friction (50) actionné par un engrenage hélicoïdal (51) agencé de façon à se visser dans et entrer en prise avec l'élément de friction dans la direction de déroulement et à se dévisser et se désengager de l'élément de friction dans la direction d'enroulement.

9. Un élément de freinage destiné à être adapté à un moulinet de façon à former le moulinet selon l'une quelconque des Revendications 1 à 8.
